# FASCICULE DE BREVET EUROPEEN

(11) **EP 2 121 413 B1**
(45) Date de publication et mention de la délivrance du brevet: **04.08.2010**
(21) Numéro de dépôt: 07870349.3
(22) Date de dépôt: 28.11.2007
(51) Int. Cl.: B62D 1/26, B61B 10/04, B61F 9/00, B61F 19/08

(54) **DISPOSITIF DE DETECTION DU RISQUE DE DERAILLEMENT ET D'EVACUATION DE DEBRIS OU D'OBJETS SUR LA VOIE DE GUIDAGE PAR RAIL D'UN VEHICULE**
VORRICHTUNG ZUR ERFASSUNG EINER ENTGLEISUNGSGEFAHR UND ENTFERNUNG VON TRÜMMERTEILCHEN UND OBJEKTEN AUF EINER FAHRZEUGFÜHRUNGSSCHIENE
DEVICE FOR DETECTING A RISK OF DERAILMENT AND THE RELEASE OF DEBRIS OR OBJECTS ONTO A VEHICLE RAIL GUIDEWAY

(30) Priorité: 29.11.2006 FR 0610435
(43) Date de publication de la demande: 25.11.2009
(73) Titulaire: Lohr Industrie, 67980 Hangenbieten (FR)
(72) Inventeur: ANDRE, Jean-Luc, 67120 Molsheim (FR)
(74) Mandataire: Metz, Paul
(86) Numéro de dépôt international: PCT/FR2007/001953
(87) Numéro de publication internationale: WO 2008/074942

(56) Documents cités:
- FR-A- 513 374
- FR-A1- 2 715 119
- FR-A1- 2 759 340
- FR-A1- 2 846 917

## Description

La présente invention se rapporte à un dispositif de détection du risque de déraillement et d'évacuation d'objets ou de débris et plus généralement d'obstacles présents sur la voie de guidage d'un véhicule de transport le long d'un rail.

Le document FR-A-513 374 décrit un dispositif conforme au préambule de la revendication 1.

Le guidage de véhicules routiers par un ensemble de guidage à galet(s) se déplaçant le long d'un rail au sol constitue la solution idéale pour la circulation urbaine des véhicules routiers de transport en commun.

Le déposant a réalisé un ensemble de guidage le long d'un rail unique de guidage encastré dans le sol présentant deux galets inclinés appliqués sur le rail de guidage par une force de précontrainte. Ce dispositif donne satisfaction par ses performances tant au point de vue de la vitesse qu'au niveau du bruit et de la fiabilité.

Les rails de guidage encastrés dans le sol se trouvent sur la voie publique et les espaces linéaires souvent en creux et formant ainsi au moins une gorge existant de part et d'autre du rail de guidage constituent des réceptacles pour les objets les plus divers pouvant pour certains engendrer de mauvais fonctionnements du guidage allant jusqu'au déraillement.

Il s'agit aussi d'objets obstruant la voie de guidage par leur seule présence au travers ou le long de cette voie. Il peut s'agir d'objets variés, depuis des débris liés à un accident de la circulation jusqu'à des pièces ou articles perdus ou abandonnés.

Il faut également considérer le cas de la glace présente dans la ou les gorges s'étendant le long du rail et susceptible de constituer en hiver un obstacle sérieux au guidage. La glace sera assimilée ci-après à un objet ou à un obstacle ou à un débris pour la glace brisée.

Pour éviter les déraillements dus aux objets et débris pouvant obstruer la voie de guidage ou se loger dans le ou les espaces latéraux formant une ou des gorges située(s) le long du rail de guidage, il a déjà été prévu deux moyens principaux d'évacuation ou d'éjection.

Le premier moyen est un dispositif de protection dit chasse-pierre dont la fonction essentielle consiste à écarter les objets se trouvant sur la voie de guidage.

Le deuxième moyen est une matière utilisée pour combler partiellement la ou les gorges. Cette matière présente des propriétés d'élasticité permettant, soit de recevoir à l'intérieur de son volume par enfoncement suivi éventuellement d'une incrustation, les petits objets par la pression provenant du passage des galets, soit pour d'autres d'arriver à les éjecter par rebondissement après le passage des galets.

Il reste les objets particuliers qui, lorsqu'ils se bloquent, provoquent un soulèvement de grande amplitude des galets pouvant conduire au déraillement.

La présente invention a pour but de dégager pendant le roulage, la voie de guidage de nombreux objets gênant le passage des galets de guidage. L'invention a également pour but de détecter le risque de déraillement et de déclencher des dispositifs et procédures d'alerte et de sécurité alors que les galets de guidage sont toujours en engagement sur le rail de guidage.

A cet effet, elle se rapporte à un dispositif d'évacuation d'objets ou de débris le long de la voie de guidage d'un véhicule unidirectionnel ou bidirectionnel guidé par au moins un rail de guidage, et de détection d'un risque de déraillement, dispositif placé en extrémité de l'un au moins des ensembles de guidage roulant sur ce rail de guidage, le dispositif ayant un corps coulissant sur et le long de ce rail de guidage monté à l'avant de l'un au moins des ensembles de guidage dans le sens de la marche du véhicule guidé, corps coulissant relié de façon articulée au support d'au moins un ensemble de guidage par une bielle de liaison, ledit corps coulissant présentant en regard d'au moins une face libre du rail de guidage un dispositif de relevage et d'évacuation des objets et débris, **caractérisé en ce qu**'il se compose:
. d'au moins une pièce de contact électrique avec le rail de guidage, solidaire ou dissociable du corps coulissant, contact électrique placé dans au moins un circuit électrique dont l'état ouvert ou fermé est pris en compte par le système de gestion du véhicule de transport, un défaut de contact électrique de cette pièce avec le rail de guidage engendrant un état de ce circuit électrique exploité pour identifier l'existence d'un risque de déraillement.

Le dispositif selon l'invention présente l'important avantage de garantir la sécurité du guidage en ne mettant en oeuvre que des moyens simples peu onéreux et que faiblement consommateurs d'énergie.

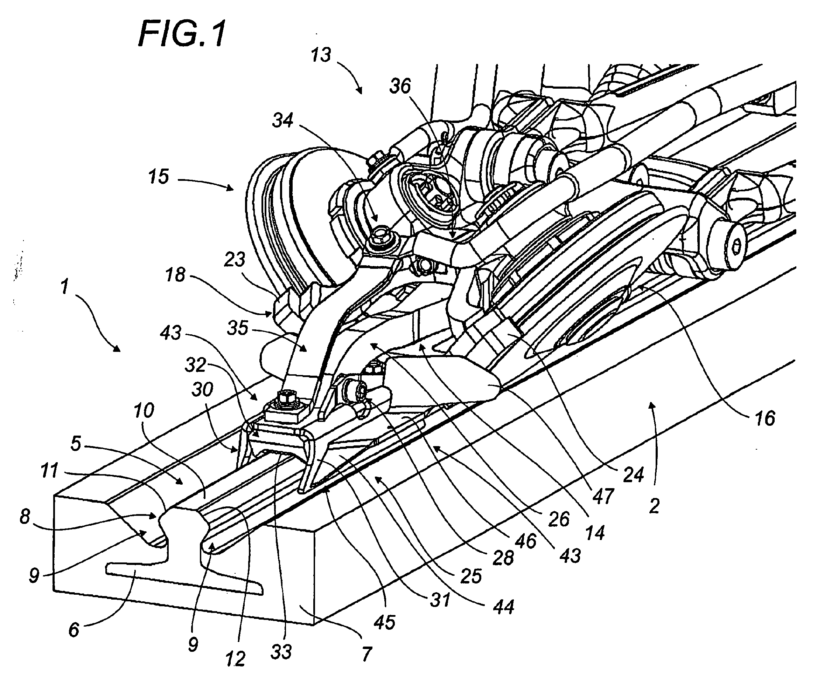

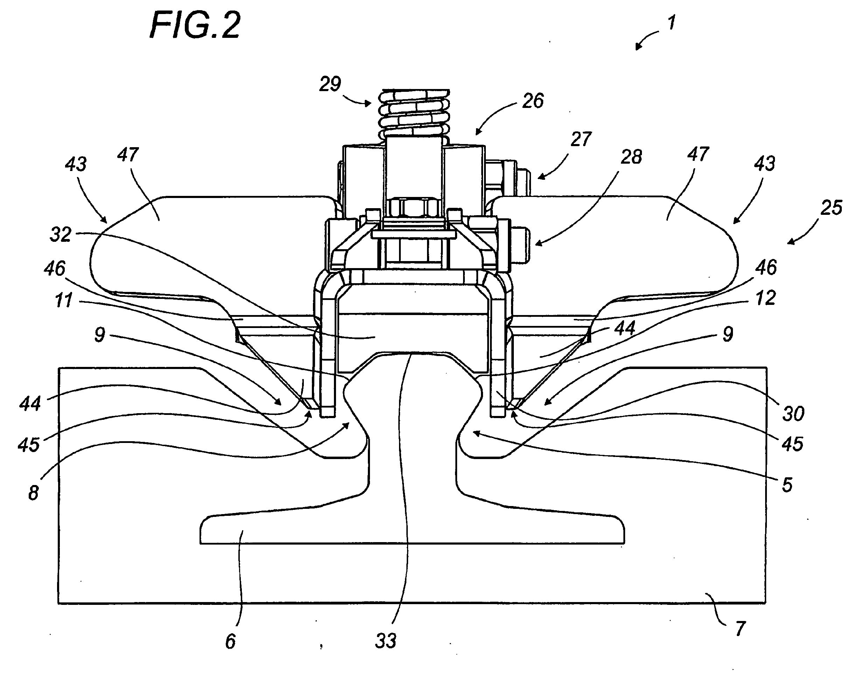

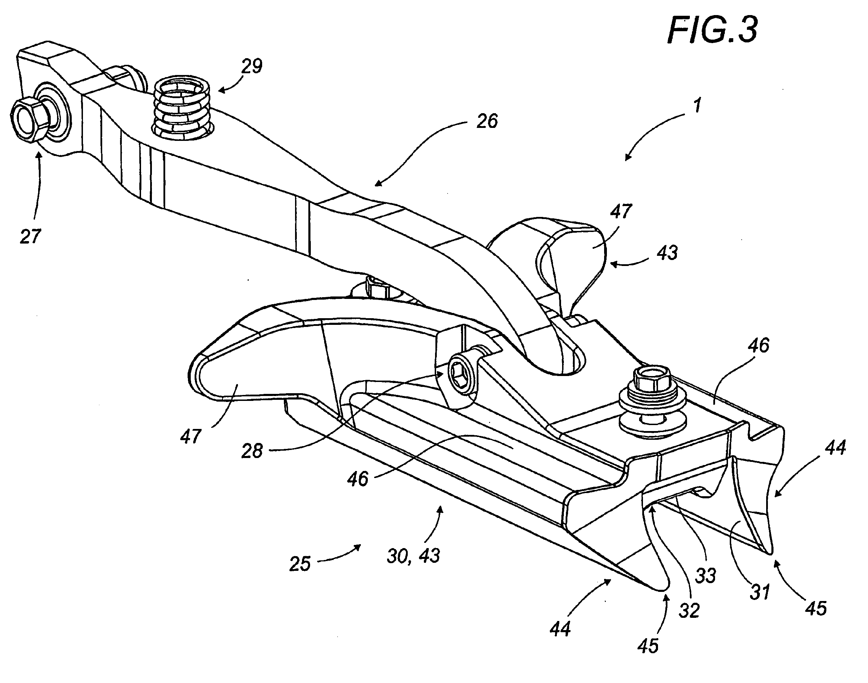

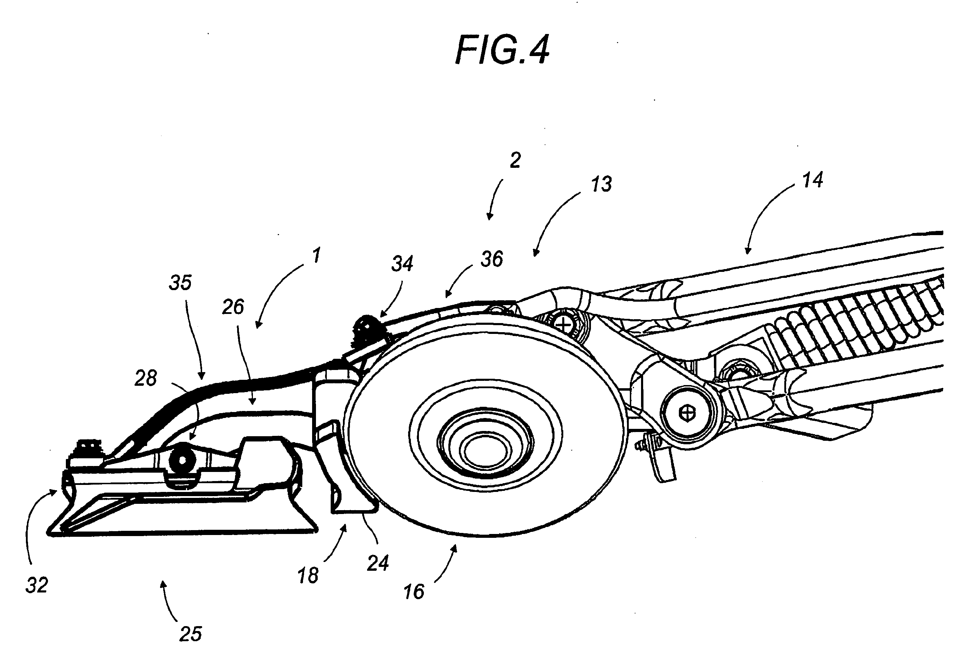

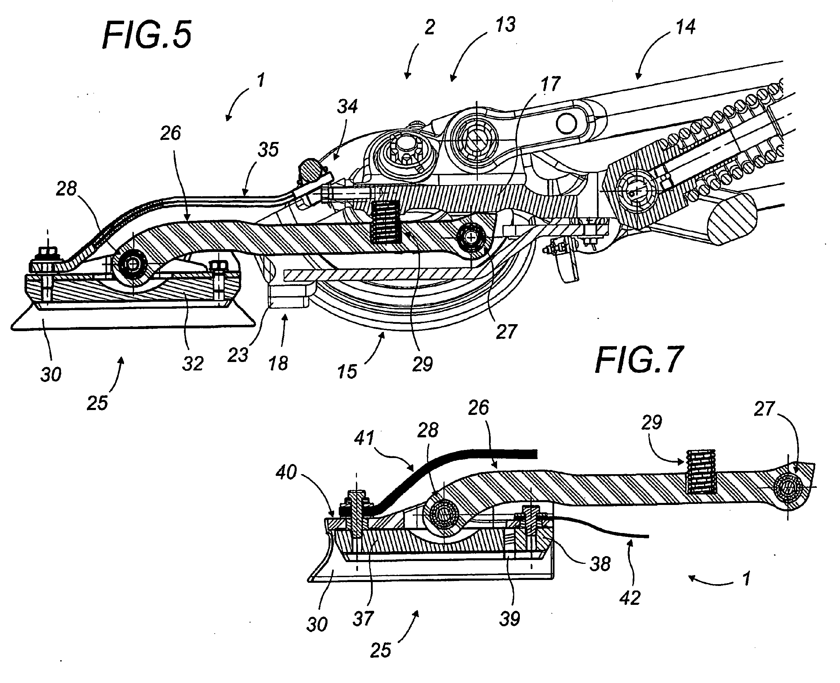

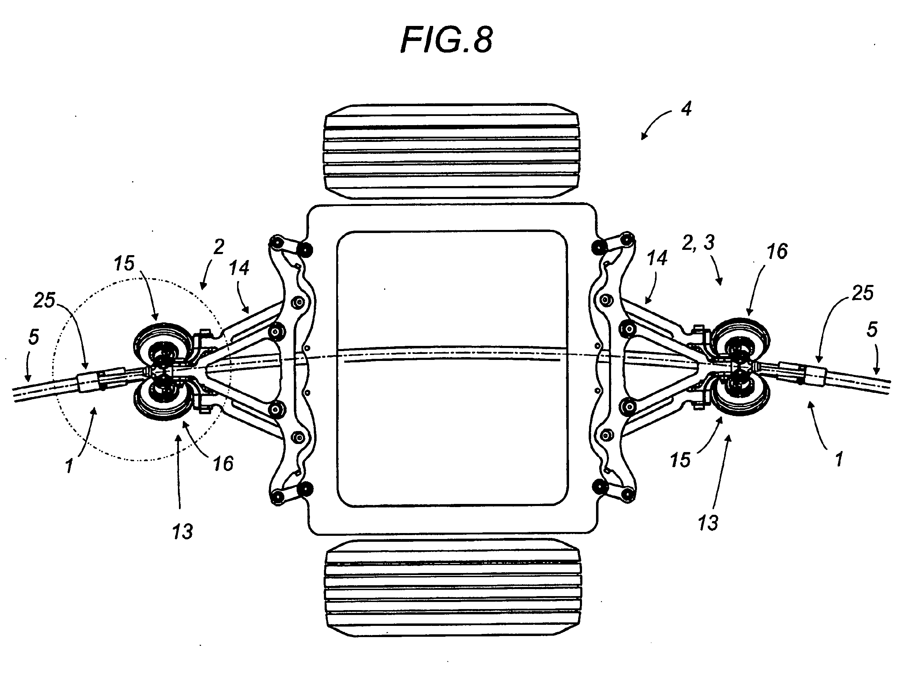

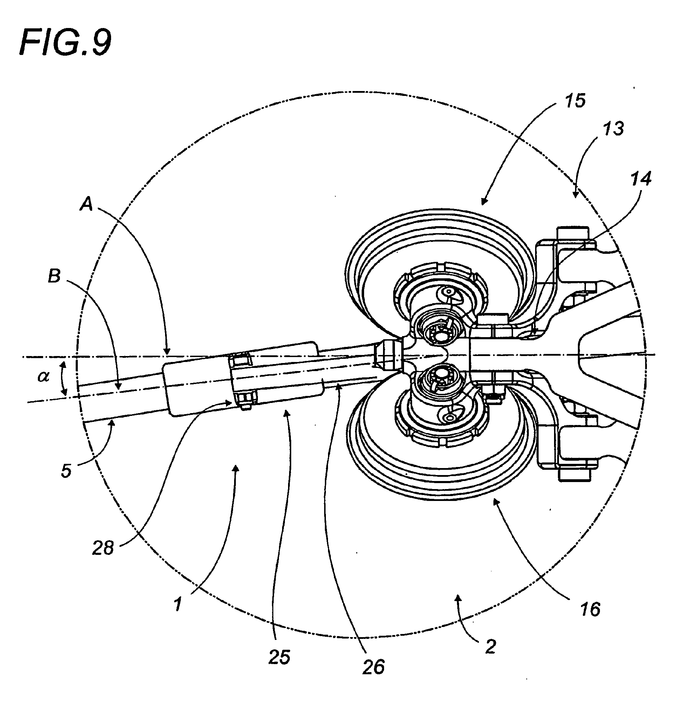

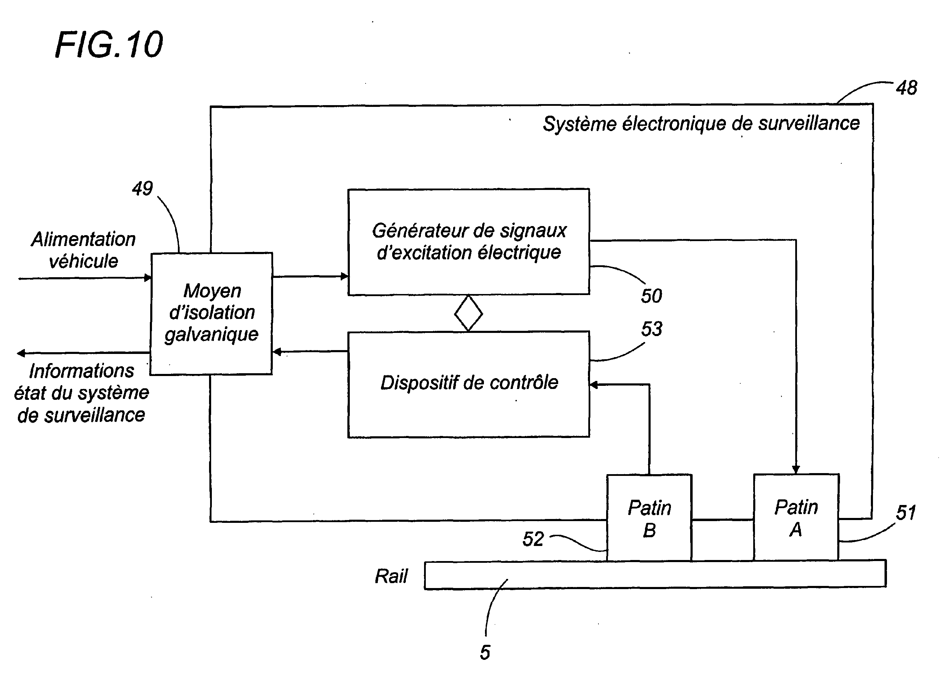

D'autres caractéristiques et avantages de l'invention apparaîtront dans la description qui suit, donnée à titre d'exemple et accompagnée des dessins dans lesquels :
. la figure 1 est une vue en perspective du dispositif de détection et d'évacuation selon une forme de réalisation de l'invention, dispositif monté sur un rail de guidage et sur un ensemble de guidage à deux galets inclinés ;
. la figure 2 est une vue simplifiée en élévation du dispositif de détection et d'évacuation de la figure 1 monté sur un rail de guidage ;
. la figure 3 est une vue simplifiée en perspective d'une variante de réalisation du dispositif de détection et d'évacuation selon l'invention ;
. la figure 4 est une vue de profil du dispositif représenté sur la figure 1 et de l'ensemble de guidage à l'avant duquel il est monté ;
. la figure 5 est une vue du même ensemble en coupe longitudinale verticale ;

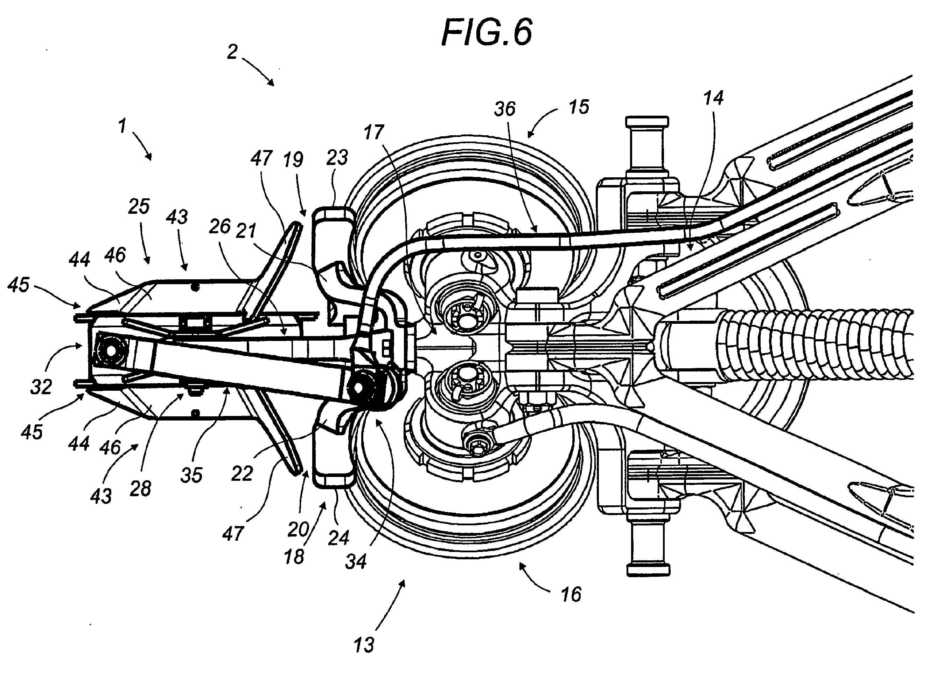

   **·** la figure 6 est une vue du même ensemble en plan ;
. la figure 7 est une vue en coupe longitudinale d'un dispositif dont le patin frotteur est constitué de deux blocs successifs ;
. la figure 8 est une illustration générale d'un module d'essieu guidé dans une courbe ;
. la figure 9 est un agrandissement de la partie encerclée sur la figure 8 montrant le désaxement possible dans les courbes grâce à l'invention entre l'ensemble de guidage et le dispositif de détection et d'évacuation ;
. la figure 10 est un schéma par blocs illustrant le principe général de fonctionnement d'un exemple particulier de circuit de détection de sécurité.

On décrira ci-après à l'aide des figures annexées un exemple de réalisation de l'invention appliqué au domaine routier des véhicules sur pneus guidés par un rail au sol. Bien entendu, elle s'applique à beaucoup d'autres cas, notamment au guidage à deux rails et en particulier à un dispositif de détection des risques de déraillement et d'évacuation d'objets ou de débris de la gorge d'un rail à gorge.

Par ailleurs, on entend par objets toute sorte d'obstacles naturels ou artificiels et ceux liés à l'environnement et aux conditions météorologiques et climatiques par exemple de la glace.

Le dispositif de détection et d'évacuation 1 selon l'invention d'objets ou de débris et plus généralement d'obstacles sur la voie de guidage d'un véhicule, par exemple de transport routier, vient se monter à l'avant dans le sens de la marche, d'au moins un ensemble de guidage 2 d'un essieu que porte dans cette application particulière, un véhicule routier de transport notamment de transport en commun et de type urbain.

Le dispositif de détection et d'évacuation 1 peut également se monter à l'arrière de l'ensemble de guidage arrière 3 dans le cas d'un module d'essieu 4 d'un véhicule bidirectionnel possédant par conséquent deux ensembles de guidage 2 et 3 et donc deux dispositifs de détection et d'évacuation 1 comme représenté sur la figure 8. Bien entendu, un seul ensemble de guidage est en service à la fois. Il s'agit de celui dirigé dans le sens de la marche.

Le guidage s'effectue le long d'un rail de guidage 5 par exemple unique et au sol comportant une semelle 6 immobilisée au fond d'un caniveau 7 de façon que le plan supérieur de son champignon 8 soit à niveau ou approximativement à niveau avec le plan de la chaussée dans l'exemple représenté.

Un exemple de rail de guidage 5 est représenté sur la figure 1. Son champignon 8 est séparé de chaque côté des bords du caniveau par des espaces linéaires en creux ou gorges telles que 9, et présente un plan supérieur à partie médiane plane 10 et à deux pistes inclinés 11 et 12 symétriques pour le roulage de deux galets de guidage.

Chaque gorge 9 constitue un réceptacle possible pour des objets et débris pouvant gêner le guidage.

Dans l'exemple représenté, l'ensemble de guidage 2 ou 3 comporte une tête de guidage 13 articulée sur un support 14 porté à l'avant et dans le cas d'un véhicule bidirectionnel aussi à l'arrière du module d'essieu 4.

La tête de guidage 13 est formée de deux galets 15 et 16 symétriques inclinés en V à pointe dirigée vers le bas. Ces galets de guidage sont montés sur un support 17 porte-galets. Ils viennent chacun en prise de roulage sous une certaine pression de contact avec une des pistes inclinées de roulage du rail respectivement 11 et 12.

Sur l'avant de la tête de guidage 13 est monté sur le support 17 porte-galets un bouclier de sécurité pousseur-écarteur 18 formé de deux ailes symétriques 19 et 20 ouvertes en V centrées sur le rail de guidage 5. Ces ailes 19 et 20 sont incurvées vers l'extérieur et comportent à leur extrémité une surface frontale renforcée 21 et 22 terminée chacune par une pièce transversale d'évacuation 23 et 24, se développant en hauteur devant les galets 15 et 16 pour les protéger.

Chaque surface frontale de ce bouclier de sécurité 18 constitue une paroi de poussée divergente de manière à forcer latéralement vers l'extérieur les objets ou débris et plus généralement les obstacles arrivant à son niveau pour les évacuer de la voie de guidage.

Sur ce même support 17 porte-galets, est monté à l'avant et à distance de la tête de guidage 13 un corps coulissant 25 sur le rail de guidage 5. Par l'expression à l'avant, il faut comprendre devant et dans le sens de la marche du véhicule. Il est monté articulé et à distance à l'avant de la tête de guidage 13 par l'intermédiaire d'une liaison mécanique par exemple une bielle de liaison 26. Cette bielle de liaison 26 est reliée d'une part par l'une de ses extrémités au support 17 porte-galets par une articulation de préférence de pivotement 27 par exemple à débattement latéral. Elle est reliée d'autre part au corps coulissant 25 du dispositif de détection et d'évacuation 1 par une deuxième articulation 28, de préférence de pivotement pouvant présenter également un débattement latéral.

Les articulations 27 et 28 sont de préférence des articulations de pivotement autour d'un axe transversal au rail de guidage 5.

Une précontrainte vers le bas par une force élastique est appliquée sur le corps coulissant 25 du dispositif de détection et d'évacuation 1 par l'intermédiaire d'un ressort de pression 29 monté entre l'avant du support 17 porte-galets et la bielle de liaison 26. La bielle de liaison 26 est dite fusible car elle présente une prédisposition à la rupture à savoir des propriétés ou elle est constituée de matériaux ou de moyens ou formée d'une combinaison de moyens ou de matériaux et de moyens procurant les mêmes effets qu'un fusible, c'est-à-dire une destruction mécanique au-delà d'une certaine force limite par exemple longitudinale. Elle se trouve par exemple, fabriquée dans un matériau pouvant se rompre suite à une contrainte mécanique prédéterminée, notamment à un effort de poussée d'une certaine valeur limite. Elle est flexible c'est-à-dire qu'elle peut se déformer pour laisser le corps coulissant 25 suivre le rail de guidage dans les courbes.

Alternativement, la bielle de liaison 26 est flexible en débattement latéral dans un plan horizontal. Dans le cas contraire, les articulations de pivotement 27 et 28 permettent un débattement autour d'un axe vertical perpendiculaire au rail.

Le corps coulissant 25 est un bloc ou un ensemble mécanique chevauchant le rail de guidage 5 et coulissant sur et le long de celui-ci.

Il est monobloc ou bien composite, c'est-à-dire formé de plusieurs parties. Fonctionnellement, il porte ou comporte un contact électrique avec le rail de guidage et est pourvu d'au moins un dispositif de relevage et d'évacuation des débris et objets hors de la voie de guidage.

Le contact électrique peut être logé dans le corps coulissant 25 de façon solidaire ou démontable de celui-ci.

On décrira ci-après sans pour autant se rendre limitatif, les deux exemples de réalisation représentés sur les figures.

Dans l'exemple représenté sur les figures 1 et 2, le corps coulissant 25 se compose d'un élément tubulaire 30 enveloppant partiellement le rail de guidage sur les faces latérales de son champignon 8 par son corps présentant en regard du rail et de chaque côté des flancs descendants tels que 31 faiblement distants du rail.

Comme représenté sur les figures 1 et 2, à l'intérieur de l'élément tubulaire 30, sur la sous face de sa partie supérieure est monté solidaire ou dissociable par exemple démontable un patin frotteur 32 servant de pièce de contact électrique avec le rail. Sa sous face 33 est de préférence profilée selon la forme de la partie supérieure du rail de guidage 5 permettant ainsi d'assurer déjà une fonction de guidage sur ce rail.

On a décrit ci-dessus un ensemble mécanique regroupant un patin frotteur et le corps coulissant 25 avec le ou les dispositif(s) de relevage et d'évacuation. On peut prévoir la constitution séparée physique et ou bien fonctionnelle séparée du ou des patin(s) et du corps coulissant 25 avec le ou les dispositif(s) de relevage et d'évacuation.

Le patin frotteur 32 de contact électrique fait partie d'un circuit électrique de détection du risque de déraillement équipant le véhicule et déclenchant le cas échéant, des dispositifs et procédures d'alerte et de sécurité alors que les galets de guidage sont toujours en engagement sur le rail de guidage.

Le patin frotteur 32 est relié électriquement à un point de continuité électrique 34 par une liaison électrique souple 35 par exemple sous la forme d'une tresse conductrice permettant, en se déformant, de suivre les mouvements du corps coulissant 25. Le circuit électrique de détection se poursuit à partir du point de continuité électrique 34 vers le véhicule de transport par un câble électrique 36 de liaison.

Comme on le verra ci-après, le défaut de contact électrique du patin frotteur 32 du dispositif de détection et d'évacuation 1 avec le rail de guidage 5 correspond à un état de circuit électrique dit état de circuit ouvert utilisé comme alarme par le circuit de détection à bord du véhicule de transport en relation avec son système central de gestion du fonctionnement en vue de la sécurité du roulage et par conséquent celle du transport.

Le patin frotteur 32 du corps coulissant 25 est réalisé monobloc ou composite par exemple, en deux parties. Un exemple de réalisation en deux parties est représenté sur la vue en coupe de la figure 7.

Selon cette forme de réalisation, les deux blocs conducteurs formant des patins 37 et 38 le constituant sont séparés par un intervalle vide 39 ou occupé par un intercalaire électriquement isolant d'épaisseur appropriée.

Le bloc 37 est de plus grande dimension car il est relié électriquement à un retour de circuit à fort ampérage.

Ces deux blocs électriquement conducteurs formant un patin frotteur composite font office de deux patins frotteurs 37 et 38 l'un à la suite de l'autre mais dissociés mécaniquement et électriquement. Ils sont maintenus et assemblés mécaniquement de façon à pouvoir garder leur individualité électrique de blocs conducteurs séparés.

Les deux blocs mécaniques formant les patins frotteurs 37 et 38 sont reliés chacun électriquement et protégés par une isolation électrique appropriée 40 à un circuit ou à plusieurs circuits séparés spécifiques par une liaison électrique séparée 41 et 42. La liaison électrique 41 correspondant au premier patin frotteur 37 est de plus forte section en raison de l'ampérage plus fort devant ou pouvant la traverser.

Ainsi, de préférence, c'est à travers ce patin 37 que l'on réalise le retour du courant d'alimentation du véhicule.

Parmi les circuits possibles on distingue deux groupes: l'un pour les fonctions électriques et l'autre pour le contrôle.

Il peut s'agir en plus d'un circuit propre à la sécurité de la surveillance, de la continuité électrique du rail et de l'état de l'alimentation électrique du véhicule et des circuits d'alimentation et de divers circuits pour plusieurs types de signaux et de fonctions.

Lorsque le corps coulissant 25 est en contact avec le rail de guidage 5, par l'intermédiaire de ses deux patins frotteurs 37 et 38, ceux-ci réalisent trois possibilités de circuits. L'un entre le premier patin frotteur 37 et le rail, un autre entre le deuxième patin frotteur 38 et le rail et un troisième entre les deux patins dont la continuité électrique est assurée par le contact simultané des deux patins frotteurs avec le rail. On peut donc bénéficier de trois chemins électriques susceptibles d'interruption.

Ces possibilités sont exploitées pour différents besoins liés aux contrôles de fonctionnement(s) mais surtout à la sécurité du guidage.

Selon le cas, c'est-à-dire le degré de soulèvement du corps coulissant, une ou plusieurs des continuités électriques peuvent être interrompues, c'est-à-dire la continuité électrique d'un des patins avec le rail ou des patins entre eux. Au moins un des deux circuits est alors ouvert.

En effet, il suffit que la surface de contact de l'un ou de l'autre des deux patins 37 ou 38 s'éloigne par soulèvement en biais ou autre par rapport au rail de guidage 5 pour que l'état de circuit ouvert du circuit de détection du risque de déraillement soit constitué et constaté. Cet état sera pris en compte par le système assurant la gestion centrale du véhicule et notamment la sécurité du transport.

Un des circuits de détection ou le circuit de détection déclenchant les mesures préventives de sécurité peut ou peuvent être réalisé(s) à partir d'une installation fixe de voie par exemple un générateur fixe de voie émettant un signal fréquentiel électrique entre la ligne aérienne de contact apportant l'énergie électrique motrice et le rail. Ce signal parvient au véhicule par le rail de guidage et éventuellement en plus par la ligne aérienne de contact et se trouve analysé ou détecté à l'intérieur du véhicule par un module de détection adapté. Le signal non reçu correspond au décollement du patin. Les actions préventives visant la sécurité telles qu'un freinage d'urgence sont le cas échéant déclenchées.

Le ou les circuit(s) de détection peu(ven)t également être réalisé(s) à partir d'installations embarquées. Un exemple non limitatif d'un tel circuit de détection a été représenté schématiquement sur la figure 10 afin d'illustrer plus complètement l'invention.

Ce circuit de détection permet de contrôler le contact électrique entre les patins montés sur le véhicule et le rail de guidage.

Deux patins au moins sont nécessaires au fonctionnement de ce circuit, ce qui le rend compatible par exemple avec la variante de la figure 7 comportant deux blocs conducteurs formant les patins frotteurs 37 et 38 séparés par un intervalle vide 39 ou occupé par un intercalaire électriquement isolant d'épaisseur appropriée. Cependant, ce circuit de détection peut s'adapter à tout autre mode de réalisation comportant au moins deux patins en contact avec le rail de guidage, qu'il s'agisse de patins de masse électrique ou de patins de retour de courant.

Pour connaître l'état des patins par rapport au rail de guidage, c'est-à-dire savoir s'ils sont ou non en contact électrique avec celui-ci, on crée une référence. Pour cela, une boucle de contrôle est mise en place au sein d'un système électronique de surveillance 48. Dans cette boucle, le rail de guidage 5 représente la terre du point de vue électrique.

Le véhicule fournit l'énergie nécessaire au fonctionnement du système électronique de surveillance 48. Cette énergie doit être électriquement isolée de la terre et donc du rail de guidage 5. Le système de surveillance 48 est ainsi isolé galvaniquement du véhicule par un moyen d'isolation galvanique 49.

Le système électronique de surveillance 48 comprend un générateur de signaux d'excitation électrique 50. Ce générateur émet un signal fréquentiel d'excitation électrique en direction d'un premier patin 51, appelé « patin A » sur la figure 10.

En situation normale de fonctionnement, le patin A se trouve en liaison électrique avec un deuxième patin 52, appelé « patin B », par l'intermédiaire du rail de guidage 5.

Le système électronique de surveillance 48 comprend également un dispositif de contrôle 53 relié au patin B, qui vérifie que le signal d'excitation électrique émis par le générateur 50 lui est bien transmis par l'intermédiaire du patin B, via le patin A et le rail de guidage 5.

Si le dispositif de contrôle 53 ne reçoit pas le signal d'excitation électrique, cela signifie que le circuit électrique est interrompu du fait du décollement de l'un au moins des patins 51 ou 52 ou en raison d'un défaut de la portion de rail de guidage 5 comprise entre les deux patins.

Le dispositif de contrôle 53 transmet une information sur l'état du système de surveillance 48 au système général assurant la gestion centrale du véhicule et la sécurité du transport, qui peut le cas échéant, déclencher des actions préventives de sécurité, telles qu'un freinage d'urgence par exemple, lorsqu'un défaut est signalé.

Avantageusement, le système de surveillance 48 permet de détecter le décollement complet de chacun des patins indépendamment de l'état de l'autre. Il n'est donc pas nécessaire que les deux patins soient décollés pour que le système détecte un défaut. De même, le système de surveillance 48 peut détecter une interruption du circuit électrique entre les deux patins 51 et 52, c'est-à-dire un défaut de la portion du rail de guidage 5 située entre ceux-ci.

Selon un mode de réalisation préférentiel, le système électronique de surveillance 48 décrit ci-dessus peut être logé dans un boîtier compact pouvant se monter au-dessus des patins 51 et 52 sur le corps coulissant 25.

L'autre fonction principale du corps coulissant est celle de l'évacuation des débris et objets se trouvant sur la voie de guidage.

A cet effet, la forme générale du corps coulissant 25 est celle d'un soc car elle présente une extrémité avant plongeante et s'élargit vers l'arrière.

Le corps coulissant 25 présente sur chacun de ses flancs une succession de déflecteurs formant à chaque fois et de chaque côté avec chaque flanc 31 du corps coulissant 25 une rampe 43 d'évacuation latérale.

Chaque rampe de relevage et d'évacuation latérale 43 se compose d'un déflecteur de relevage incliné montant 44 à bec inférieur plongeant 45, déflecteur suivi d'une platine horizontale 46, la rampe étant terminée par un déviateur transversal 47 d'éjection latérale sous la forme d'une paroi transversale dirigée en biais vers l'extérieur.

La variante représentée sur la figure 3 présente les mêmes caractéristiques générales que celle déjà décrite. Il s'agit d'une variante plus compacte selon laquelle les rampes 43 et l'élément tubulaire 30 sont intégrés dans un même ensemble mécanique, c'est-à-dire que ces éléments peuvent être réalisés d'une seule pièce par exemple en tôle pliée.

La fragilité mécanique c'est-à-dire la prédisposition à la rupture de la bielle de liaison 26 portant le corps coulissant est dictée principalement par l'impératif selon lequel la bielle de liaison doit se rompre notamment en se soulevant pour éviter d'entraîner les galets de guidage suffisamment vers le haut pour qu'ils s'échappent des flancs du rail de guidage.

Le dispositif selon l'invention se comporte comme un fusible qui par sa rupture interrompt la liaison mécanique au support sur lequel il est monté en cas d'effort excessif suite à la résistance à l'avancement d'un objet ou de débris se bloquant sur la voie de guidage.

Par ailleurs, en raison du débattement latéral des articulations de pivotement 27 et 28 reliant la bielle 26 au support 17 porte-galets, et, ou bien, en raison de son éventuel caractère flexible, le corps coulissant peut suivre parfaitement et aisément le rail à tout moment dans les courbes. On bénéficie aussi d'un désaxement progressif puis d'un auto-réalignement évitant ainsi d'endommager l'ensemble de guidage ou de provoquer un mauvais fonctionnement de celui-ci pouvant conduire au déraillement.

Cet avantage est illustré par les figures 8 et 9 montrant un module d'essieu 4 à deux ensembles de guidage l'un 2 avant et l'autre 3 arrière, associés chacun à un dispositif de détection et d'évacuation selon l'invention. Cet ensemble à deux têtes de guidage se trouve sur les véhicules bidirectionnels. Les axes longitudinaux d'un ensemble de guidage et d'un dispositif de détection et d'évacuation respectivement A et B sont sécants d'un angle "α" dans les courbes, assurant ainsi le bon guidage du corps coulissant 25 par la flexibilité de la bielle de liaison et/ou le ou les débattements latéraux des articulations de pivotement.

Le fonctionnement général s'avère assez simple.

Les petits objets ou débris restent effacés sous le corps coulissant 25 sans affecter le roulage.

Pour les autres objets ou débris par exemple plus gros, les rampes 43 d'éjection latérale remplissent leur fonction d'évacuation. Les objets ou débris arrivent sur les déflecteurs par l'effet des platines inclinées et horizontales et sont poussés latéralement vers l'extérieur de la voie par le mouvement d'avance de l'ensemble de guidage.

Pour les gros objets ou débris ou autres représentant un obstacle sérieux et une cause probable de déraillement, le corps coulissant 25 est soulevé en passant au dessus de l'obstacle et au-delà d'une certaine contrainte mécanique déterminée par construction, la bielle de liaison 26 se brise, faisant office de fusible. Le corps coulissant 25 quitte le rail, ce qui entraîne la détection du risque de déraillement alors que les galets de guidage sont encore en engagement sur le rail.

En dessous de cette limite de rupture de la bielle de liaison 26, celle-ci peut également se soulever en passant au dessus du ou des obstacles, ce qui provoque de la même façon un décollement du patin et donc la détection d'un risque de déraillement.

Bien entendu, si l'obstacle est trop volumineux, le corps coulissant 25 viendra en choc frontal contre lui et la bielle de liaison 26 se brisera de suite.

Le dispositif de détection et d'évacuation 1 selon l'invention assure ainsi, dans pratiquement la totalité des cas, la sécurité du guidage du véhicule de transport et commande l'arrêt du véhicule pour éviter des dégâts conséquents.

## Revendications

1. Dispositif d'évacuation d'objets ou de débris le long de la voie de guidage d'un véhicule unidirectionnel ou bidirectionnel guidé par au moins un rail de guidage (5), et de détection d'un risque de déraillement, dispositif placé en extrémité de l'un au moins des ensembles de guidage (2, 3) roulant sur ce rail de guidage (5), le dispositif ayant un corps coulissant (25) sur et le long de ce rail de guidage (5) monté à l'avant de l'un au moins des ensembles de guidage (2, 3) dans le sens de la marche du véhicule guidé, corps coulissant (25) relié de façon articulée au support d'au moins un ensemble de guidage (2, 3) par une bielle de liaison (26), ledit corps coulissant (25) présentant en regard d'au moins une face libre du rail de guidage (5) un dispositif de relevage et d'évacuation latérale des objets et débris, **caractérisé en ce qu'**il comporte :
. au moins une pièce de contact électrique avec le rail de guidage (5), solidaire ou dissociable du corps coulissant (25), contact électrique placé dans au moins un circuit électrique dont l'état ouvert ou fermé est pris en compte par le système de gestion du véhicule de transport, un défaut de contact électrique de cette pièce avec le rail de guidage (5) engendrant un état de ce circuit électrique exploité pour identifier l'existence d'un risque de déraillement.

2. Dispositif de détection et d'évacuation selon la revendication 1, **caractérisé en ce que** la bielle de liaison (26) présente une prédisposition à la rupture au-delà d'un effort prédéterminé qui s'exerce sur le corps coulissant (25).

3. Dispositif de détection et d'évacuation selon l'une quelconque des revendications précédentes, **caractérisé en ce que** la bielle de liaison (26) est articulée à chacune de ses extrémités par une articulation de pivotement (27, 28) respectivement sur un support faisant partie de l'ensemble de guidage (2, 3) et sur le corps coulissant (25).

4. Dispositif de détection et d'évacuation selon la revendication précédente, **caractérisé en ce que** chaque articulation (27, 28) est une articulation de pivotement autour d'un axe transversal au rail de guidage (5) ou d'un axe vertical perpendiculaire au rail de guidage (5).

5. Dispositif de détection et d'évacuation selon l'une quelconque des revendications précédentes, **caractérisé en ce que** la bielle de liaison (26) permet un débattement latéral par flexibilité dans le plan horizontal ou parce que l'une au moins de ses articulations de pivotement (27, 28) autorise un débattement latéral.

6. Dispositif de détection et d'évacuation selon l'une quelconque des revendications précédentes, **caractérisé en ce que** la bielle de liaison (26) est montée en rappel vers le bas par une force de pression élastique du corps coulissant (25) sur le rail de guidage.

7. Dispositif de détection et d'évacuation selon la revendication 1, **caractérisé en ce que** la pièce de contact électrique est un patin frotteur (32) logé dans le corps coulissant (25) dont le chant inférieur ou la sous face (33) porte sur la face supérieure du rail de guidage (5).

8. Dispositif de détection et d'évacuation selon la revendication précédente, **caractérisé en ce que** le frotteur du corps coulissant (25) est réalisé en deux parties sous la forme de deux blocs successifs coulissants formant des patins frotteurs (37, 38) séparés par un intervalle vide ou un intercalaire (39) électriquement isolant, chacun des patins étant connecté électriquement à une liaison électrique (41, 42) en vue de mettre les contacts électriques des patins avec le rail de guidage (5) dans au moins deux circuits électriques, le rail de guidage (5) réalisant la continuité électrique, lorsque ceux-ci sont en contact simultané avec lui, d'une part entre chacun des blocs (37, 38) et le rail et d'autre part entre les deux blocs (37, 38).

9. Dispositif de détection et d'évacuation selon la revendication précédente **caractérisé en ce que** les au moins deux circuits sont d'une part, pour l'un des patins (37) le ou un des circuits de retour d'alimentation ou un groupe de circuits concernant l'alimentation et son contrôle et d'autre part pour l'autre patin (38), un circuit de détection pour le contrôle et la sécurité du roulage ou un groupe de circuits à cet effet.

10. Dispositif de détection et d'évacuation selon la revendication 1 **caractérisé en ce que** l'au moins un circuit comprend un générateur fixe sur la voie d'un signal fréquentiel parvenant à travers le rail de guidage (5) et la pièce de contact électrique en contact avec ce rail à un récepteur à bord du véhicule détectant ce signal en cas de contact de la pièce de contact électrique avec le rail ou ne le détectant pas en cas d'absence de contact pour déclencher des actions visant la sécurité des personnes transportées et du matériel.

11. Dispositif de détection et d'évacuation selon la revendication 1 **caractérisé en ce qu'**il comprend au moins deux pièces de contact électrique avec le rail de guidage (5) sous la forme d'au moins deux patins frotteurs (51, 52) placés dans un circuit électrique de détection comportant un système électronique de surveillance (48) embarqué, alimenté par le véhicule mais isolé galvaniquement de celui-ci et comprenant un générateur de signaux d'excitation électrique (50) et un dispositif de contrôle (53) reliés dans une boucle de contrôle via les deux patins frotteurs (51, 52) et le rail de guidage (5), le dispositif de contrôle (53) informant le système de gestion du véhicule en cas de non réception par le dispositif de contrôle (53) du signal d'excitation électrique émis par le générateur de signaux d'excitation électrique (50).

12. Dispositif de détection et d'évacuation selon la revendication 1, **caractérisé en ce que** le dispositif de relevage et d'évacuation est un dispositif présent au moins sur un des flancs du corps coulissant (25) et comporte une rampe latérale de relevage et d'évacuation (43) formée par un déflecteur de relevage (44) incliné montant, précédé d'un bec (45) plongeant et suivi d'une platine horizontale (46) en plateau et terminée par un déviateur transversal (47) d'éjection latérale sous la forme d'une paroi en biais.

13. Dispositif de détection et d'évacuation selon la revendication 1, **caractérisé en ce que** le support de l'ensemble de guidage comporte à son extrémité un bouclier de sécurité (18) se développant en deux ailes (19, 20) symétriques par rapport à l'axe longitudinal de l'ensemble de guidage (2, 3), ailes ouvertes en V et centrées sur l'axe du rail de guidage (5) et **en ce que** chacune des ailes est incurvée vers l'extérieur et comporte à son extrémité une surface frontale renforcée (21, 22) terminée chacune par une pièce transversale d'évacuation (23, 24) protégeant les galets de guidage (15, 16).

14. Dispositif de détection et d'évacuation selon la revendication 1, **caractérisé en ce qu'**il est présent à l'avant et à l'arrière respectivement de chaque ensemble de guidage avant (2) et arrière (3) d'un module d'essieu (4) d'un véhicule bidirectionnel.

15. Application d'un dispositif de détection et d'évacuation selon l'une quelconque des revendications précédentes à un véhicule routier urbain de transport en commun guidé par un unique rail de guidage (5) au sol au moyen d'au moins un ensemble de guidage (2, 3) à deux galets inclinés (15, 16) roulant sur le rail de guidage (5).

## Claims

1. A device for releasing objects or debris along a guideway for either an unidirectional or a bidirectional vehicle guided by at least one guide rail (5) and for detecting risk of derailment, the device being placed at the extremity of at least one guide assemblies (2, 3) moving along this guide rail (5), the device comprising a sliding body (25) moving on and along this guide rail (5), attached to the front of at least one of the guide assemblies (2, 3) in the direction of movement of the guided vehicle, said sliding body (25) being articulated to the support for at least one guide assembly (2, 3) by a connecting rod (26), said sliding body (25) having a device, facing at least one free surface of the guide rail (5), for lateral lifting and releasing objects and debris; **characterized in that** it comprises:
• at least one element for electrical contact with the guide rail (5), either integrated with or removable from the sliding body (25). said electrical contact element being located in at least one electrical circuit whose open or closed state is detected by the transport vehicle control system, such that failure of the electrical contact element to contact the guide rail (5) causes the state of the electrical circuit used to identify existence of a risk of derailment.

2. The detection and release device according to claim 1 **characterized in that** the connecting rod (26) is predisposed to break beyond a point at which a certain predetermined force is exerted on the sliding body (25).

3. The detection and release device according to any one of the preceding claims **characterized in that** the connecting rod (26) is articulated at each extremity, by a pivoting articulation (27, 28), respectively on a support forming part of the guide assembly (2, 3) and on the sliding body (25).

4. The detection and release device according to the preceding claim **characterized in that** each articulation (27, 28) is an articulation pivoting on an axis transverse to the guide rail (5) or on a vertical axis perpendicular to the guide rail (5).

5. The detection and release device according to any one of the preceding claims **characterized in that** the connecting rod (26) allows by flexibility a lateral clearance in the horizontal plane or that at least one of the pivoting articulations (27, 28) allows lateral clearance.

6. The detection and release device according to any one of the preceding claims **characterized in that** the connecting rod (26) is attached with downward restoring force by virtue of a pressing elastic force from the sliding body (25) on the guide rail.

7. The detection and release device according to claim 1 **characterized in that** the electric contact element is a contact shoe (32) housed in the sliding body (25), and **in that** either a lower edge or a lower surface (33) of the contact shoe (32) rests on an upper surface of the guide rail (5).

8. The detection and release device according to the preceding claim **characterized in that** the electrical contact element of the sliding body (25) is made as two successive sliding blocks forming contact shoes (37, 38) which are separated by either an empty space or an electrically insulating layer (39), each of said contact shoes being electrically connected to an electrical connection (41, 42) such that the electrical contacts of the contact shoes with the guide rail (5) is placed in at least two electrical circuits, the guide rail (5) forming the electrical continuity when the contact shoes simultaneously contact the guide rail (5), firstly between each of the contact shoes (37, 38) and the guide rail, and secondly between the two contact shoes (37, 38).

9. The detection and release device according to the preceding claim **characterized in that** the at least two circuits are :
for one contact shoe (37), the or one of the supply return circuits or a group of circuits concerning supply and its control; and
for the other contact shoe (38), a detection circuit for the control and safety of movement or a group of circuits for the control and safety of movement.

10. The detection and release device according to claim 1 **characterized in that** at least one of the electrical circuits comprises a device attached to the track which generates a frequential signal passing through the guide rail (5) and the contact of the electrical contact element with the guide rail to a receptor on the vehicle which either detects the signal if the electrical contact element contacts the rail, or does not detect the signal if the electrical contact element shoe fails to contact the guide rail, in order to launch actions relating to the safety of passengers and material being transported by the vehicle.

11. The detection and release device according to claim 1 **characterized in that** it comprises at least two electrical contact elements contacting the guide rail (5) in the form of at least two contact shoes (51, 52) placed in an electric detection circuit comprising an onboard electronic surveillance system (48), supplied by the vehicle and galvanically insulated from the vehicle and comprising an electrical excitation signal generator (50) and a control device (53) joined in a control loop through the two contact shoes (51, 52) and the guide rail (5), the control device (53) signaling to the vehicle management system if the control device (53) fails to receive the electrical excitation signal transmitted by the electrical excitation signal generator (50).

12. The detection and release device according to claim 1 **characterized in that** the lifting and releasing device is located on at least one side of the sliding body (25) and comprises a lateral lifting and clearing ramp (43) formed by an upright angled lifting deflector (44), preceded by a plunging tip (45) and followed either by a horizontal plate (46) or platform and terminating in a transverse deflector (47) in the form of a diagonal wall for lateral ejection of the debris.

13. The detection and release device according to claim 1 **characterized in that** the support for the guide assembly comprises at an extremity a safety shield (18) forming two flanges (19, 20) that are symmetrical relative to the longitudinal axis of the guide assembly (2, 3), the two flanges are arranged in a V-shape that is centered on the axis of the guide rail, and **in that** each of the two flanges is curved towards the exterior and comprises at the extremity a reinforced front surface (21, 22) each terminating in a transverse release piece (23, 24) protecting the guide rollers (15, 16).

14. The detection and release device according to claim 1 **characterized in that** the detection and release device is present at the front of each front guide assembly (2) and at the rear of each rear guide assembly (3) of an axle module (4) on a bidirectional vehicle.

15. An application of the detection and release device according to any one of the preceding claims for a public urban road transport vehicle guided along a single ground guide rail (5) by means of at least one guide assembly (2,3) with two angled rollers (15,16) moving along the guide rail (5).

## Patentansprüche

1. Vorrichtung zur Entfernung von Gegenständen oder Trümmern entlang der Führungsbahn eines uni- oder bidirektionalen Fahrzeugs, das von mindestens einer Führungsschiene (5) geführt wird, und Ermittlung eines Entgleisungsrisikos, wobei die Vorrichtung am Ende mindestens einer der Führungseinheiten (2, 3) plaziert ist, die auf dieser Führungsschiene rollen (5), wobei die Vorrichtung einen Gleitkörper (25) aufweist, der auf und entlang dieser Führungsschiene (5) gleitet und auf dem Vorderteil mindestens einer der Führungseinheiten (2, 3) in der Fahrrichtung des geführten Fahrzeugs montiert ist, wobei der Gleitkörper (25) mit der Stütze mindestens einer Führungsanordnung (2, 3) über eine Verbindungspleuelstange (26) gelenkig verbunden ist und gegenüber mindestens einer freien Seite der Führungsschiene (5) eine Vorrichtung zum Heben und seitlichen Entfernen der Gegenstände und Trümmer aufweist,
**gekennzeichnet dadurch, dass** sie folgendes umfasst:
mindestens ein elektrisches Kontaktstück zum Kontakt mit der Führungsschiene (5), einstückig mit oder abtrennbar vom Gleitkörper (25), wobei der elektrische Kontakt in mindestens einem Stromkreis plaziert ist, dessen offener oder geschlossener Zustand vom Führungssystem des Transportfahrzeugs erfasst wird, wobei ein elektrischer Kontaktdefekt dieses Stücks mit der Führungsschiene (5) einen Zustand dieses Stromkreises erzeugt, der ausgenutzt wird, um das Vorhandensein eines Entgleisungsrisikos zu identifizieren.

2. Ermittlungs- und Räumvorrichtung nach Anspruch 1, **gekennzeichnet dadurch, dass** die Verbindungspleuelstange (26) bei Überschreitung einer vorgegebenen Kraft, die auf den Gleitkörper (25) ausgeübt wird, bricht.

3. Ermittlungs- und Räumvorrichtung nach einem beliebigen der vorherigen Ansprüche, **gekennzeichnet dadurch, dass** die Verbindungspleuelstange (26) an jedem ihrer Enden über ein Drehgelenk (27, 28) mit einer Stütze, die zu der Führungsanordnung (2, 3) gehört, und mit dem Gleitkörper (25) gelenkig verbunden ist.

4. Ermittlungs- und Räumvorrichtung nach dem vorherigen Anspruch, **gekennzeichnet dadurch, dass** jedes Gelenk (27, 28) ein Drehgelenk um eine Querachse an der Führungsschiene (5) herum ist oder um eine senkrechte Achse lotrecht zur Führungsschiene (5).

5. Ermittlungs- und Räumvorrichtung nach einem beliebigen der vorherigen Ansprüche, **gekennzeichnet dadurch, dass** die Verbindungspleuelstange (26) einen seitlichen Federweg durch Nachgiebigkeit in der waagrechten Ebene gestattet oder weil mindestens eines seiner Drehgelenke (27, 28) einen seitlichen Federweg zulässt.

6. Ermittlungs- und Räumvorrichtung nach einem beliebigen der vorherigen Ansprüche, **gekennzeichnet dadurch, dass** die Verbindungspleuelstange (26) durch eine elastische Druckkraft des Gleitkörpers (25) nach unten zurückfedernd auf der Führungsschiene montiert ist.

7. Ermittlungs- und Räumvorrichtung nach Anspruch 1, **gekennzeichnet dadurch dass,** das elektrische Kontaktstück ein Reibschuh (32) ist, der in dem Gleitkörper (25) untergebracht ist, dessen Unterkante oder Unterseite (33) auf die Oberseite der Führungsschiene (5) führt.

8. Ermittlungs- und Räumvorrichtung nach dem vorherigen Anspruch, **gekennzeichnet dadurch, dass** der Reibschuh des Gleitkörpers (25) in zwei Teilen in Form von zwei aufeinanderfolgenden Gleitblöcken verwirklicht ist, so dass Reibschuhe (37, 38) gebildet werden, getrennt durch einen leeren Zwischenraum oder ein elektrisch isolierendes Trennblatt (39), wobei jeder der Schuhe elektrisch mit einer elektrischen Verbindung (41, 42) verbunden ist, um die elektrischen Kontakte der Schuhe mit der Führungsschiene (5) in mindestens zwei Stromkreise zu setzen, wobei die Führungsschiene (5) den elektrische Durchgang herstellt, wenn sie in gleichzeitigem Kontakt mit ihr sind, einerseits zwischen jedem der Blöcke (37, 38) und der Schiene und andererseits zwischen den beiden Blöcken (37, 38)

9. Ermittlungs- und Räumvorrichtung nach dem vorherigen Anspruch, **gekennzeichnet dadurch, dass** die mindestens zwei Stromkreise einerseits für den einen der Schuhe (37) der oder einer der Versorgungsrückschlüsse oder eine Gruppe von Stromkreisen sind, die die Versorgung und ihre Kontrolle betreffen und andererseits für den anderen Schuh (38) eine Erfassungsschaltung für die Kontrolle und die Sicherheit des Transports oder eine Gruppe von Stromkreisen zu diesem Zweck.

10. Ermittlungs- und Räumvorrichtung nach Anspruch 1, **gekennzeichnet dadurch, dass** der mindestens eine Kreislauf einen festen Generator auf dem Weg eines Frequenzsignals umfasst, das durch die Führungsschiene (5) gelangt, und das elektrische Kontaktstück in Kontakt mit dieser Schiene an einem Empfänger in dem Fahrzeug, der dieses Signal bei Kontakt des elektrischen Kontaktstückes mit der Schiene ermittelt oder, bei fehlendem Kontakt, es nicht ermittelt, um Aktionen einzuleiten die auf die Sicherheit der transportierten Personen und des Materials abzielen.

11. Ermittlungs- und Räumvorrichtung nach Anspruch 1, **gekennzeichnet dadurch, dass** sie mindestens zwei elektrische Kontaktstücke zum Kontakt mit der Führungsschiene (5) umfasst, in Form von mindestens zwei Reibschuhen (51, 52), in einem Ermittlungsstromkreis mit einem eingebetteten elektronischen Überwachungssystem (48), gespeist von dem Fahrzeug, aber galvanisch isoliert von diesem, mit einem elektrischen Treibersignalgenerator (50) und einer Kontrollvorrichtung (53), die in einer Kontrollschleife über die beiden Reibschuhe (51, 52) und die Führungsschiene (5) verbunden sind, wobei die Kontrollvorrichtung (53) das Führungssystem des Fahrzeugs bei Nicht-Empfang des von dem elektrischen Treibersignalgenerator (50) ausgegeben elektrischen Treibersignals durch die Kontrollvorrichtung (53) informiert.

12. Ermittlungs- und Räumvorrichtung nach Anspruch 1, **gekennzeichnet dadurch, dass** die Hebe- und Räumvorrichtung mindestens auf einer der Flanken des Gleitkörpers (25) vorhanden ist und eine seitliche Hebe- und Räum-Auflauffläche (43) aufweist, gebildet durch ein ansteigendes Hebeumlenkblech (44), hinter einem von oben nach unten gerichteten Schnabel (45) und gefolgt von einer waagrechten scheibenförmigen Platine (46) und abgeschlossen von einen Querablenker (47) mit seitlichem Ausstoß in Form einer schrägen Wand.

13. Ermittlungs- und Räumvorrichtung nach Anspruch 1, **gekennzeichnet dadurch, dass** die Stütze der Führungsanordnung an ihrem Ende ein Sicherheitsschild (18) umfasst, mit zwei Flügeln (19, 20) symmetrisch zu der Längsachse der Führungsanordnung (2, 3), die V-förmig geöffnet und auf die Achse der Führungsschiene (5) zentriert sind, sowie **dadurch**, dass jeder Flügel nach außen gebogen ist und an seinem Ende eine verstärkte Vorderfläche (21, 22) umfasst, die jeweils durch ein Räum-Querstück (23, 24) abgeschlossen ist, das die Führungslaufrollen (15, 16) schützt.

14. Ermittlungs- und Räumvorrichtung nach Anspruch 1, **gekennzeichnet dadurch, dass** sie vor und hinter jeder vorderen (2) und hinteren (3) Führungsanordnung einer Achsbaugruppe (4) eines bidirektionalen Fahrzeugs vorhanden ist.

15. Anwendung einer Ermittlungs- und Räumvorrichtung nach einem beliebigen der vorherigen Ansprüche auf ein städtisches öffentliches Verkehrsmittel, das von einer einzigen Führungsschiene (5) mittels mindestens einer Führungsanordnung (2, 3) am Boden geführt wird, mit zwei schrägen Laufrollen (15, 16), die auf der Führungsschiene (5) rollen.
